# EUROPÄISCHE PATENTSCHRIFT

(11) **EP 2 795 145 B1**
(45) Veröffentlichungstag und Bekanntmachung des Hinweises auf die Patenterteilung: **22.05.2019**
(21) Anmeldenummer: 12818987.5
(22) Anmeldetag: 21.12.2012
(51) Int. Cl.: F16C 33/66, F16C 29/06

(54) **LINEARFÜHRUNG MIT EINER SCHMIERMITTELVORRICHTUNG**
LINEAR GUIDE WITH A LUBRICANT DEVICE
GUIDAGE LINÉAIRE DOTÉ D'UN, DISPOSITIF DE LUBRIFIANT

(30) Priorität: 23.12.2011 EP 11405375
(43) Veröffentlichungstag der Anmeldung: 29.10.2014
(73) Patentinhaber: Schneeberger Holding AG, 4914 Roggwil (CH)
(72) Erfinder: MISCHLER, Ernst, CH-4914 Roggwil (CH)
(74) Vertreter: EGLI-EUROPEAN PATENT ATTORNEYS
(86) Internationale Anmeldenummer: PCT/CH2012/000278
(87) Internationale Veröffentlichungsnummer: WO 2013/091122

(56) Entgegenhaltungen:
- DE-A1-102004 008 780
- DE-A1-102007 012 746
- DE-U1- 20 203 780
- US-A1- 2011 176 754

## Beschreibung

Die Erfindung betrifft eine Linearführung mit einer Schmiermittelvorrichtung.

Es sind Linearführungen bekannt, welche eine Laufschiene und einen Laufwagen umfassen, wobei der Laufwagen verschiebbar auf der Laufschiene gelagert ist. Hierbei enthält der Laufwagen zumindest zwei gegenüberliegende und in Längsrichtung der Laufschiene ausgerichtete Wälzkörperkanäle, welche jeweils aus einem Lastkanal, einem parallel hierzu ausgerichteten Rückführkanal und zwei jeweils-endseitig von den Kanälen angeordneten Umlenkkanälen zusammengesetzt sind. In jedem Wälzkörperkanal sind eine Vielzahl von Wälzkörpern eingebracht, welche in den Wälzkörperkanälen endlos umlaufen. Hierbei sind die zumindest zwei Wälzkörperkanäle zueinander gegenüberliegend derart am Laufwagen angeordnet, dass die jeweils im Lastkanal geführten Wälzkörper bei einem Führen des Laufwagens entlang der Laufschiene in jeweils beidseitig in Längsrichtung entlang der Laufschiene eingebrachten Lastspuren wälzen.

Um den Verschleiss der Wälzkörper selber und den Verschleiss der Lastspuren der Laufschiene zu unterdrücken und zudem eine sehr genaue Bewegung des Laufwagens bei minimaler Reibung beizubehalten, muss den Wälzkörpern permanent ein Schmiermittel zugeführt werden, beispielsweise ein Schmierfett oder Schmieröl.

Hierzu wird in der US 5,615,955 vorgeschlagen, die Wälzkörper durch jeweils zwischengesetzte und selbstschmierende Abstandskugeln zu schmieren, welche ein Schmiermittel enthalten und dieses an die Wälzkörper abgeben. Es besteht ein Problem darin, dass das Schmiermittel in kurzer Zeit aufgebraucht ist. Ein Ersatz bzw. Nachfüllen ist nicht möglich oder sehr zeitintensiv, wodurch sich hohe Wartungskosten einstellen. Ein weiteres Problem besteht darin, dass die nicht zur Aufnahme von Kräften ausgebildeten, selbstschmierenden Abstandskugeln einen Raum verdrängen, welcher ansonsten zur Aufnahme weiterer Wälzkörper genutzt werden könnte, um die maximal mögliche Anzahl von Wälzkörpern bereitzustellen. Durch die im Vergleich zu üblichen Linearführungen somit reduzierte Anzahl von Wälzkörpern können nur reduzierte Lagerkräfte aufgenommen werden. Insgesamt sind Tragkraft und Lebensdauer der Linearführung reduziert.

Ein wartungsreduzierter Ansatz wird in der US 2006/0215943 verfolgt. In dieser Druckschrift ist eine Linearführungen gezeigt, bei welcher die Wälzkörper durch Rückführkanäle laufen, welche jeweils durch Röhrenelemente gebildet sind, in denen Schmiermittel aufgesaugt ist. Hierzu ist das Material der Röhrenelemente von einem zellularen oder porösen Aufbau. In diesen Rückführkanälen werden die Wälzkörper kontinuierlich durch Abgabe des Schmiermittels geschmiert. Es sind Schmiermittel-Reservoirs vorgesehen, welche diese Röhrenelemente wiederum mit Schmiermittel versorgen. Es besteht allerdings ein Problem darin, dass die Zufuhr von Schmiermittel an die Röhrenelemente ungleichförmig erfolgt. Es besteht ferner ein Problem in der Abnutzung der Röhrenelemente. Sobald diese abgenutzt sind, erfolgt keine Schmiermittelabgabe, wodurch die Leistung der zuverlässigen Schmierung in der Linearführung nicht mehr gesichert ist. Ein Austausch der abgenutzten Röhrenelemente ist nur unter erhöhtem Aufwand möglich. Ein weiteres Problem besteht darin, dass die Schmierung nur im Rückführkanal erfolgt. Nachteilhafterweise ist hierdurch jedoch das Schmiermittelvorkommen im gesamten Lastkanal reduziert. Dies ist insbesondere deshalb nachteilig, da insbesondere hier die Lagerkräfte auf die Wälzkörper wirken und demzufolge eine zuverlässige Schmierung besonders wichtig ist. Durch die unzureichende Schmierung im Lastkanal ist der Verschleiss im Lastkanal selber und an der Laufschiene hoch.

In der DE 198 28 587 wird vorgeschlagen, die Wälzkörper in jeweiligen Flanschelementen zu schmieren, welche jeweils einen Umlenkkanal zwischen Rückführkanal und Lastkanal des Laufwagens bereitstellen. Hierzu enthält jedes Flanschelement ferner ein Filzmaterial mit einem Vorsprung, welcher in den Laufbereich eines jeweiligen Umlenkkanals ragt. Das Filzmaterial ist mit Schmiermittel getränkt, welches über den Vorsprung kontinuierlich an die umlaufenden Wälzkörper abgegeben wird. Durch die näher an den Laufkanal gerückte Schmiermittelabgabe wird dieser zwar im Vergleich zu dem vorherigen Ansatz zuverlässiger geschmiert, allerdings ist das Schmiermittelvorkommen, bezogen auf die gesamte Länge des Lastkanals, noch immer unzureichend. Ein weiteres Problem besteht darin, dass, bedingt durch die endseitig angeordneten Flanschelemente, die Ausmasse in Längsrichtung des Laufwagens nachteilhaft erhöht werden.

Weitere, gattungsgemässe Linearführungen sind zum Beispiel aus DE 202 03 780 U1 und DE 10 2007 012 746 A1 vorbekannt.

Es ist Aufgabe der vorliegenden Erfindung, eine Linearführung bereitzustellen, bei welcher die zuvor genannten Probleme gelöst werden. Es ist insbesondere Aufgabe der vorliegenden Erfindung, eine Linearführung bereitzustellen, bei welcher eine zuverlässige Schmierung der Wälzkörper gewährleistet ist. Es ist zudem Aufgabe der vorliegenden Erfindung, eine Linearführung bereitzustellen, bei welcher Zeit und Kosten zur Wartung reduziert sind.

Diese Aufgabe wird erfindungsgemäss durch eine Linearführung mit den Merkmalen des Patentanspruchs 1 gelöst.

Diese Linearführung umfasst eine Laufschiene und einen Laufwagen, welcher auf der Laufschiene verschiebbar gelagert ist, wobei der Laufwagen zumindest zwei Wälzkörperkanäle enthält und in jeden der zwei Wälzkörperkanäle eine Vielzahl von Wälzkörpern eingebracht sind. Dabei ist jeder der zwei Wälzkörperkanäle aus einem Lastkanal, einem parallel hierzu ausgerichteten Rückführkanal und zwei jeweils ein Ende des Lastkanals mit einem Ende des Rückführkanals verbindenden Umlenkkanälen derart zusammengesetzt, dass die Wälzkörper in jeweils einem der Wälzkörperkanäle endlos umlaufend geführt sind, wobei die zumindest zwei Wälzkörperkanäle zueinander gegenüberliegend derart am Laufwagen angeordnet sind, dass die jeweils im Lastkanal geführten Wälzkörper bei einem Führen des Laufwagens entlang der Laufschiene in einer von zwei sich in Längsrichtung der Laufschiene erstreckenden Lastspuren der Laufschiene wälzen. Weiterhin umfasst die Linearführung eine Schmiermittelvorrichtung mit zumindest einem schmiermittelabsorbierenden Element,
wobei das schmiermittelabsorbierende Element U-förmig aus einer Basis und zwei von der Basis vorragenden Schenkeln ausgebildet ist und entnehmbar derart am Laufwagen in einem sich zwischen einer Fläche des Laufwagens und jedem der zwei Wälzkörperkanäle erstreckenden Aufnahmebereich für das schmiermittelabsorbierende Element anbringbar ist, dass das schmiermittelabsorbierende Element, falls es am Laufwagen angebracht ist, direkt mit den jeweils in den Lastkanälen geführten Wälzkörpern derart in Kontakt gebracht ist, dass Endabschnitte der Schenkel mit den in den Lastkanälen geführten Wälzkörpern in Kontakt stehen.

Gemäss der Erfindung ist das schmiermittelabsorbierende Element derart geformt, dass es zum Anbringen in dem Aufnahmebereich als Ganzes in den Aufnahmebereich nur durch Überwinden einer Kraftweinwirkung einer Klemmkraft oder Federkraft einsetzbar ist, wobei durch die Krafteinwirkung der Klemmkraft oder der Federkraft eine Fläche des schmiermittelabsorbierenden Elements zumindest abschnittsweise gegen eine Fläche des Laufwagens in dem Aufnahmebereich gedrückt ist und das schmiermittelabsorbierende Element fest zwischen den Wälzkörpern und der Fläche des Laufwagens in dem Aufnahmebereich eingespannt und gehalten ist.

Die erfindungsgemässe Linearführung hat den besonderen Vorteil einer zuverlässigen Schmierung der Wälzkörper im Lastkanal des Laufwagens. Hierdurch werden der Verschleiss und die Reibung des Laufwagens auf der Laufschiene reduziert. Dies gilt insbesondere im Hinblick auf Laufruhe, Gleichförmigkeit der Bewegung und reduzierte Reibung. Dieser Vorteil erwächst daraus, dass die Wälzkörper direkt im Lastkanal geschmiert werden. Nur in diesem Bereich des jeweiligen Wälzkörperkanals treten Lagerkräfte auf, welche bei unzureichender Schmierung zu Verschleiss und Abnutzung der Lauffläche des Lastkanals und der Lastspur der Laufschiene führen. Durch die überraschend einfache Lösung werden die Probleme aus dem Stand der Technik beseitigt. Die Wälzkörper können Kugeln oder Rollen aus Stahl, Keramik, usw. oder weitere rotierende Elemente sein.

Dadurch, dass das schmiermittelabsorbierende Element U-förmig aus einer Basis und zwei von der Basis vorragenden Schenkeln ausgebildet ist und die Endabschnitte der Schenkel mit den in den Lastkanälen geführten Wälzkörpern in Kontakt stehen, ist eine Voraussetzung dafür geschaffen, dass das Schmiermittel durch Kapillarwirkung gleichförmig von dem schmiermittelabsorbierenden Element an die Wälzkörper im Lastkanal überführt wird. Durch diese besondere Ausbildung kann eine einstückige Schmiermittelvorrichtung bzw. des schmiermittelabsorbierenden Elements zur gleichzeitigen Schmierung der Wälzköper in beiden Wälzkörperkanälen herangezogen werden. Somit werden Wartungsarbeiten zum Austausch oder Auffüllen der Schmiermittelvorrichtung bzw. des schmiermittelabsorbierenden Elements reduziert. Durch die einstückige Ausbildung sind insgesamt die Kosten der Schmiermittelvorrichtung gering gehalten. Vorteilhafterweise ist das schmiermittelabsorbierende Element derart geformt, dass, falls es am Laufwagen angebracht ist, die den Schenkeln entgegengesetzte Fläche der Basis durch eine Krafteinwirkung zumindest abschnittsweise gegen eine Fläche des Laufwagens gedrückt ist, durch welche Krafteinwirkung die Schmiermittelvorrichtung fest zwischen den Wälzkörpern und der Fläche des Laufwagens gehalten ist. Dies hat den Vorteil, dass das schmiermittelabsorbierende Element, beispielsweise von einem Längsende des Laufwagens aus, schnell und einfach in den Zwischenraum eingeschoben werden kann, welcher sich zwischen Laufwagen und Laufschiene einstellt. Hierbei gleiten die Endabschnitte der beiden Schenkel der U-förmigen Schmiermittelvorrichtung auf den jeweiligen Wälzkörpern im Lastkanal. Gleichzeitig steht die Fläche der Basis, welche den Schenkeln entgegengesetzt ist, mit der Fläche des Laufwagens in Kontakt, welche zur Laufschiene hin ausgerichtet ist. Somit kann das schmiermittelabsorbierende Element z.B. in Längsrichtung des Laufwagens zwischen den Wälzkörpern und der oben beschriebenen Fläche des Laufwagens eingeschoben werden.

Vorzugsweise ist die Krafteinwirkung eine Klemmkraft, welche durch ein Stauchen der Schenkel und/oder der Basis des schmiermittelabsorbierenden Elements hervorgerufen ist, welche Klemmkraft der Richtung der Stauchung entgegengesetzt gerichtet ist. Zum festen Einspannen des schmiermittelabsorbierenden Elements in den Laufwagen dient somit eine Klemmkraft, welche hervorgerufen wird, indem die Schenkel und/oder die Basis des schmiermittelabsorbierenden Elements beim Einsetzen in den Laufwagen gestaucht werden. Die hieraus resultierende Klemmkraft wirkt in entgegengesetzte Richtung und spannt die Schenkel und die Basis fest zwischen den Wälzkörpern und der oben beschriebenen Fläche ein. Zum Einsetzen des schmiermittelabsorbierenden Elements in den Laufwagen muss lediglich die Klemmkraft überwunden werden, mit welcher das schmiermittelabsorbierende Element zwischen den Wälzkörpern und der oben beschriebenen Fläche des Laufwagens eingespannt ist. Somit kann das schmiermittelabsorbierende Element ohne zusätzliche Mittel zuverlässig gelagert werden.

Vorzugsweise weist die Basis des schmiermittelabsorbierenden Elements eine nach oben gerichtete Wölbung auf, wobei die Krafteinwirkung eine Federkraft ist, welche einer auf die Wölbung der Basis angelegten Kraft zur Überführung der Basis in eine ebene Fläche entgegengesetzt gerichtet ist. Zum festen Einspannen des schmiermittelabsorbierenden Elements in den Laufwagen wird das schmiermittelabsorbierende Element durch eine Federkraft eingespannt, wobei das schmiermittelabsorbierende Element hierzu federnd ausgeführt ist. Die Basis des schmiermittelabsorbierenden Elements weist eine nach oben gerichtete gewölbte Form auf, welche nur durch Krafteinwirkung auf die Oberseite der Basis, in eine Richtung entgegengesetzt der Wölbung, in eine ebene Form überführt werden kann. Derart ausgeführt wird das schmiermittelabsorbierende Element in den Laufwagen eingeschoben. Im eingeschobenen Zustand spannt die in entgegengesetzte Richtung wirkende Federkraft die Schenkel fest zwischen den Wälzkörpern und der Fläche ein. Somit kann das schmiermittelabsorbierende Element auch in dieser Ausführungsform ohne zusätzliche Mittel zuverlässig gelagert werden.

Vorzugsweise ist die Krafteinwirkung durch ein Federelement hervorgerufen, welches zwischen der Basis des schmiermittelabsorbierenden Elements und der Fläche des Laufwagens zwischengelegt ist und eine Federkraft zwischen der Basis und der Fläche des Laufwagens anlegt. Beim Einlegen des schmiermittelabsorbierenden Elements in den Laufwagen wird das zwischengesetzte Federelement gestaucht und übt als Reaktion hierauf die Federkraft aus. Das Federelement kann beispielsweise eine Flachfeder sein. Somit kann das schmiermittelabsorbierende Element zuverlässig gelagert werden.

Gleichzeitig ist das schmiermittelabsorbierende Element in alle andere Richtungen fest gelagert. Das schmiermittelabsorbierende Element wird gänzlich in den Aufnahmeraum des Laufwagens eingeschoben, so dass die Endabschnitte der Schenkel auf ganzer Länge mit den Wälzkörpern in Kontakt stehen. Hierbei muss das schmiermittelabsorbierende Element nicht notwendigerweise derart bemessen sein, dass die Endabschnitte der Schenkel mit sämtlichen Wälzkörpern im Lastkanal in Kontakt stehen. Wenn das schmiermittelabsorbierende Element auf diese Weise in den Laufwagen eingesetzt ist, ist das schmiermittelabsorbierende Element durch die Krafteinwirkung (Klemmkraft und/oder Federkraft) derart fest eingespannt, dass das schmiermittelabsorbierende Element auch im Betrieb keine Längsverschiebung in Längsrichtung des Laufwagens erfährt. Somit müssen vorteilhafterweise keine Befestigungen zur Befestigung des schmiermittelabsorbierenden Elements am Laufwagen bereitgestellt werden. Ein weiterer Vorteil besteht darin, dass der Laufwagen für Wartungsarbeiten nicht zerlegt zu werden braucht. Insgesamt werden Zeit und Aufwand für Wartungsarbeiten reduziert.

Vorzugsweise enthält die Linearführung zwei Abdeckplättchen, welche jeweils an den Längsenden des Laufwagens anbringbar sind, wobei die Abdeckplättchen ausgelegt sind, eine Längsverschiebung des schmiermittelabsorbierenden Elements über die Längsenden des Laufwagens hinaus zu unterbinden. Wie zuvor beschrieben, kann die Klemmkraft zum Einspannen des schmiermittelabsorbierenden Elements in den Laufwagen derart gross sein, dass eine Längsverschiebung des schmiermittelabsorbierenden Elements auch im Betrieb der Linearführung ausgeschlossen werden kann. Gemäss dieser Ausführungsform sind zwei Abdeckplättchen vorgesehen, welche, unabhängig von der Höhe der Klemmkraft, ein Herausfahren des schmiermittelabsorbierenden Elements aus dem Laufwagen heraus zuverlässig verhindern. Sollte im Betrieb der Linearführung eine Längskraft auf das schmiermittelabsorbierende Element einwirken, welche die Klemmkraft überwindet, so wird das schmiermittelabsorbierende Element in Längsrichtung jeweils nur so weit verschoben, bis es gegen eines der Abdeckplättchen anstösst. Ein Herausfahren des schmiermittelabsorbierenden Elements aus dem Laufwagen heraus wird somit verhindert.

Vorzugsweise enthalten die Abdeckplättchen jeweils flexible Dichtungslippen, welche den Laufbereich auf der Laufschiene abdichtend umschliessen. Durch die abdichtende Wirkung der Abdeckplättchen wird ein Eindringen von Schmutz, Staub oder sonstigen Partikeln in den Bereich zwischen Laufwagen und Laufschiene verhindert. Somit wird insbesondere vorteilhaft verhindert, dass Partikel in den Wälzbereich zwischen Wälzkörper und Laufschiene eindringen und eine Zerstörung oder zumindest einen starken Verschleiss hervorrufen können.

In einer weiteren Ausführungsform enthält der Laufwagen vorzugsweise zumindest eine an einem Längsende des Laufwagens eingelassene Aussparung, in welche das schmiermittelabsorbierende Element von dem Längsende aus einsteckbar und gehalten ist. In dieser Variante wird ein schmiermittelabsorbierendes Element, in Längsrichtung betrachtet, von einer Seite aus in die Aussparung des Laufwagens eingeschoben. Es können auch Aussparungen an beiden Längsenden des Laufwagens vorgesehen sein, in welche jeweils ein schmiermittelabsorbierendes Element eingeschoben wird. Auch hierbei treten die Schenkel des jeweiligen schmiermittelabsorbierenden Elements mit den Wälzkörpern in Kontakt und schmieren diese zuverlässig.

In einer weiteren Ausführungsform ist vorzugsweise das zumindest eine schmiermittelabsorbierende Element in einen von der Unterseite des Laufwagens zugänglichen Aufnahmebereich des Laufwagens einsetzbar. Hierbei wird das schmiermittelabsorbierende Element von der Unterseite des von der Laufschiene entnommenen Laufwagens eingesetzt. Im eingesetzten Zustand stehen die Schenkel des schmiermittelabsorbierenden Elements mit den Wälzkörpern im Lastkanal in Kontakt. Es kann hierbei vorgesehen sein, dass das schmiermittelabsorbierende Element aus einem elastischen Material ausgebildet ist.

Vorzugsweise ist der Aufnahmebereich im eingesetzten Zustand des schmiermittelabsorbierenden Elements von der Unterseite des Laufwagens durch eine Verschlussplatte abdichtbar. Hierdurch wird verhindert, dass Fremdpartikel in den Aufnahmebereich eindringen. Die Verschlussplatte dient zudem zum festen Einspannen des schmiermittelabsorbierenden Elements in den Aufnahmebereich.

Vorzugsweise ist das schmiermittelabsorbierende Element einstückig aus einem schmiermittelabsorbierenden Material oder einer Kombination aus schmiermittelabsorbierenden Materialien ausgebildet. Das jeweilige schmiermittelabsorbierende Material kann beispielsweise ein Gewebe, einen Schaumstoff, ein poröses Material oder weitere Materialien mit absorbierenden Eigenschaften enthalten.

Vorzugsweise ist das schmiermittelabsorbierende Element aus einem verschleissfesten Material oder einer Kombination aus verschleissfesten Materialien ausgebildet. Hierdurch ist ein langandauernder und zuverlässiger Kontakt mit den Wälzkörpern gewährleistet.

Im Folgenden wird die Erfindung anhand von Ausführungsbeispielen näher erläutert. Hierbei zeigen:
- Figur 1: eine perspektivische Darstellung einer Linearführung;
- Figuren 2a,b: Darstellungen eines Laufwagens einer Linearführung in einer ersten Ausführungsform;
- Figuren 3a,b: Darstellungen eines Laufwagens einer Linearführung in einer zweiten Ausführungsform;
- Figuren 4a,b: Darstellungen eines Laufwagens einer Linearführung in einer dritten Ausführungsform;
- Figuren 5a,b: Darstellungen eines Laufwagens einer Linearführung in einem Beispiel nicht gemäß der Erfindung;
- Figuren 6a-c: Darstellungen eines Laufwagens einer Linearführung in einer vierten Ausführungsform; und
- Figuren 7a,b: Darstellungen eines Laufwagens einer Linearführung in einer fünften Ausführungsform.

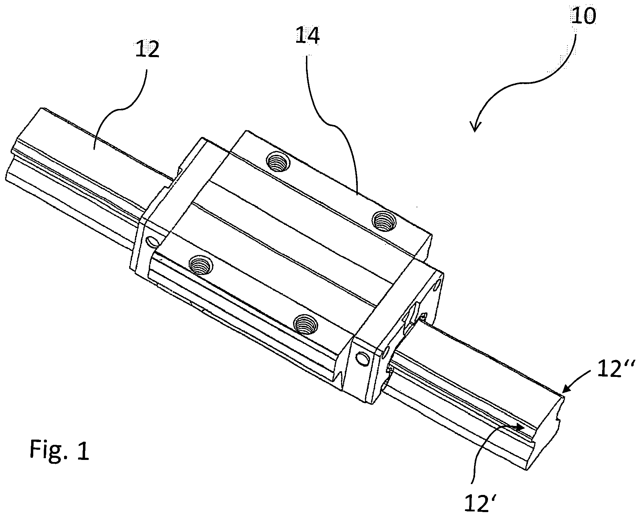

In Fig. 1 ist eine beispielhafte Linearführung 10 gezeigt, welche einen auf einer Laufschiene 12 beweglich angeordneten Laufwagen 14 enthält. Der Laufwagen 14 umfasst beispielsweise zwei gegenüberliegende umlaufende Wälzkörperkanäle (nicht gezeigt), in welchen Wälzkörper geführt sind, welche zwischen jeweils einem Wälzkörperkanal und einer von zwei Lastspuren 12', 12" der Laufschiene 12 wälzen.

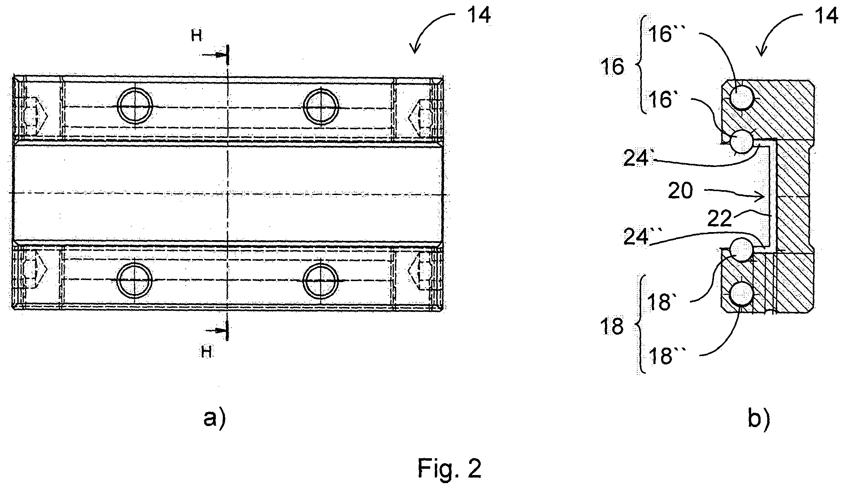

In Figuren 2a und 2b ist ein Laufwagen 14 einer Linearführung gemäss Fig. 1 in einer ersten Ausführungsform gezeigt. Fig. 2a zeigt eine Draufsicht auf den Laufwagen 14, und Fig. 2b zeigt eine Schnittansicht entlang einer in Fig. 2a gezeigten Linie H-H. Der Laufwagen 14 enthält zwei Wälzkörperkanäle 16, 18. Jeder Wälzkörperkanal 16, 18 enthält jeweils einen Lastkanal 16', 18', einen Rückführkanal 16", 18" und zwei Umlenkkanäle (nicht gezeigt), welche den Lastkanal 16', 18' und den Rückführkanal 16", 18" an deren beiden Enden miteinander verbinden. Innerhalb der Wälzkörperkanäle 16, 18 sind Wälzkörper (in Fig. 2b schematisch als Kreisflächen, welche jeweils einen als Kugel ausgebildeten Wälzkörper andeuten, dargestellt) geführt, wobei die jeweils den Lastkanal 16', 18' durchlaufenden Wälzkörper, in Schnittrichtung betrachtet, an ihrem etwa halben Umfang im Lastkanal 16', 18' gelagert sind. Der jeweils entgegengesetzte Umfang ist spielfrei innerhalb einer der Lastspuren 12' bzw. 12" der Laufschiene 12 (beide in Fig. 1, aber nicht in Fig. 2b gezeigt) gelagert. Somit ist eine spielfreie Verbindung zwischen Laufschiene 12 und Laufwagen 14 gewährleistet, wobei der Laufwagen 14 über die Wälzkörper in Längsrichtung der Laufschiene 12 gelagert bewegbar ist.

Wie bei nahezu allen Wälzlagern üblich, ist auch bei dieser Linearführung eine ausreichende Schmierung notwendig. Hierzu ist eine Schmiermittelvorrichtung mit zumindest einem schmiermittelabsorbierenden Element 20 vorgesehen, welches in einem Aufnahmebereich zwischen Laufwagen 14 und Laufschiene eingebracht ist und am Laufwagen 14 selber gehalten ist. Das schmiermittelabsorbierende Element 20 ist U-förmig aus einer Basis 22 und zwei von der Basis 22 vorragenden Schenkeln 24', 24" ausgebildet. Der Aufnahmebereich und das schmiermittelabsorbierende Element 20 sind hierbei derart ausgeführt, dass die Aussenflächen der Schenkel 24', 24" gegen Seitenwände des Aufnahmebereichs fest anliegen. Ferner liegt die Oberfläche der Basis 22 an der Deckenfläche des Aufnahmebereichs an. Schliesslich stehen Endabschnitte der Schenkel 24', 24" mit den im Lastkanal 16', 18' geführten Wälzkörpern in Kontakt. Durch diese Anordnung ist das schmiermittelabsorbierende Element 20 in alle Richtungen, mit Ausnahme der Richtung parallel zur Laufschiene, fest gelagert.

Das schmiermittelabsorbierende Element 20 wird von einem der Längsenden des Laufwagens 14 aus mit einer Kraft in den Aufnahmebereich hineingeschoben, welche eine Klemmkraft und/oder Federkraft überwindet. Die Klemmkraft gewährleistet den zuverlässigen Kontakt zwischen den Wälzkörpern und dem schmiermittelabsorbierenden Element 20 und verhindert, dass das schmiermittelabsorbierende Element 20 auch im Betrieb der Linearführung 10 (Führen des Laufwagens 14 auf der Laufschiene 12) herausgeschoben wird. Somit kann vorteilhafterweise auf eine Befestigung des schmiermittelabsorbierenden Elements 20 verzichtet werden.

Alternativ kann eine Befestigung vorgesehen werden. Hierzu können beispielsweise zwei Abdeckplättchen (nicht gezeigt) bereitgestellt werden, welche an den Längsenden des Laufwagens 14 aufgesteckt werden. Diese Abdeckplättchen sind dabei derart geformt, dass das eingesetzte schmiermittelabsorbierenden Element 20 in Längsrichtung gegen Innenbereiche anstossen kann, wodurch eine weitere Bewegung aus dem Aufnahmebereich heraus effektiv verhindert wird. Zur Entnahme des schmiermittelabsorbierenden Elements 20 kann eines der Abdeckplättchen entfernt werden, wodurch der Aufnahmebereich zugänglich wird. Anschliessend kann das schmiermittelabsorbierende Element 20 einfach gegen Überwindung der Klemmkraft und/oder Federkraft aus dem Aufnahmebereich heraus geschoben werden.

Ein ganz wesentlicher Vorteil der Erfindung besteht darin, dass die Schmierung der Wälzkörper im Lastkanal 16', 18' selber stattfindet. Somit wird eine Schmierung in jenen Bereichen der Linearführung bereitgestellt, wo diese aufgrund hoher Lasten und Lagerkräfte besonders zuverlässig sein muss. Aufgrund der effektiven Schmiermittelabgabe werden der Verschleiss reduziert, die Verschiebekräfte durch Verringerung der Reibung wesentlich verbessert und insgesamt der Schmiermittelverbrauch reduziert. Im Umkehrschluss können die Wartungsintervalle verlängert werden, wodurch wiederum Kosten eingespart werden.

Ein weiterer Vorteil besteht darin, dass die Wartungsarbeiten zum Entnehmen und Einführen des schmiermittelabsorbierenden Elements 20 am Laufwagen direkt durchgeführt werden können, ohne dass dieser von der Laufschiene entnommen zu werden braucht. Insgesamt sind die Wartungsarbeiten schnell und einfach durchführbar.

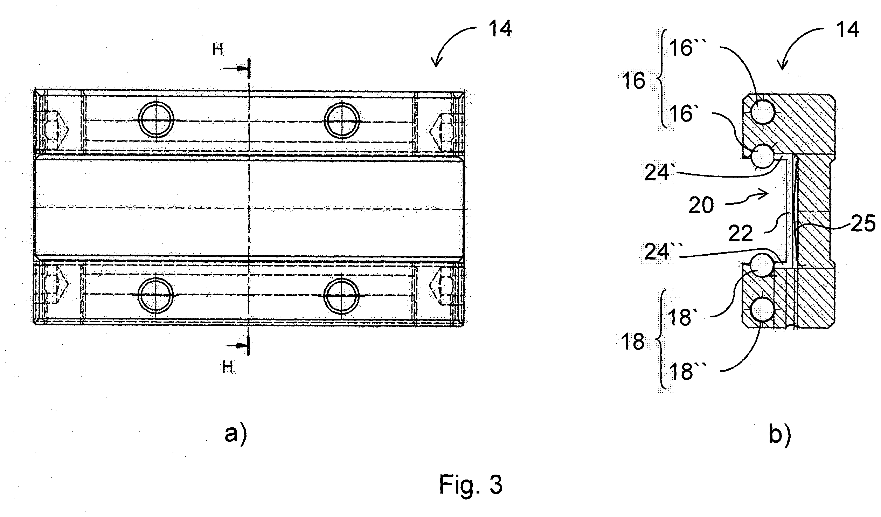

In Figuren 3a und 3b ist ein Laufwagen 14 einer Linearführung gemäss Fig. 1 in einer zweiten Ausführungsform gezeigt. Fig. 3a zeigt eine Draufsicht auf den Laufwagen 14, und Fig. 3b zeigt eine Schnittansicht entlang einer in Fig. 3a gezeigten Linie H-H. Wie die Figuren 3a und 3b andeuten, ist der Laufwagen 14 gemäss Fig. 3a identisch mit dem Laufwagen 14 gemäss Fig. 2a.

Im Falle der Ausführungsform gemäss Fig. 3b ist eine Schmiermittelvorrichtung mit zumindest einem schmiermittelabsorbierenden Element 20 vorgesehen, welches in einem Aufnahmebereich zwischen Laufwagen 14 und Laufschiene eingebracht ist und am Laufwagen 14 selber gehalten ist. Das schmiermittelabsorbierende Element 20 ist U-förmig aus einer Basis 22 und zwei von der Basis 22 vorragenden Schenkeln 24', 24" ausgebildet. Der Aufnahmebereich und das schmiermittelabsorbierende Element 20 sind hierbei derart ausgeführt, dass die Aussenflächen der Schenkel 24', 24" gegen Seitenwände des Aufnahmebereichs fest anliegen. Endabschnitte der Schenkel 24', 24" sind dabei mit den im Lastkanal 16', 18' geführten Wälzkörpern in Kontakt. Weiterhin ist ein Federelement 25 vorhanden, welches zwischen der Basis 22 des schmiermittelabsorbierenden Elements 20 und einer Fläche des Laufwagens 14 zwischengelegt ist und eine Federkraft zwischen der Basis 22 und der Fläche des Laufwagens 14 anlegt. Die Basis 22 und die Schenkel 24', 24" des schmiermittelabsorbierenden Elements 20 sind derart ausgebildet, dass das schmiermittelabsorbierende Element 20 aufgrund der Krafteinwirkung des Federelements 25 an eine Fläche des Laufwagens 14 und/oder an die Wälzkörper in den Lastkanälen 16', 18' gedrückt ist. Durch diese Anordnung ist das schmiermittelabsorbierende Element 20 in alle Richtungen, mit Ausnahme der Richtung parallel zur Laufschiene, fest gelagert.

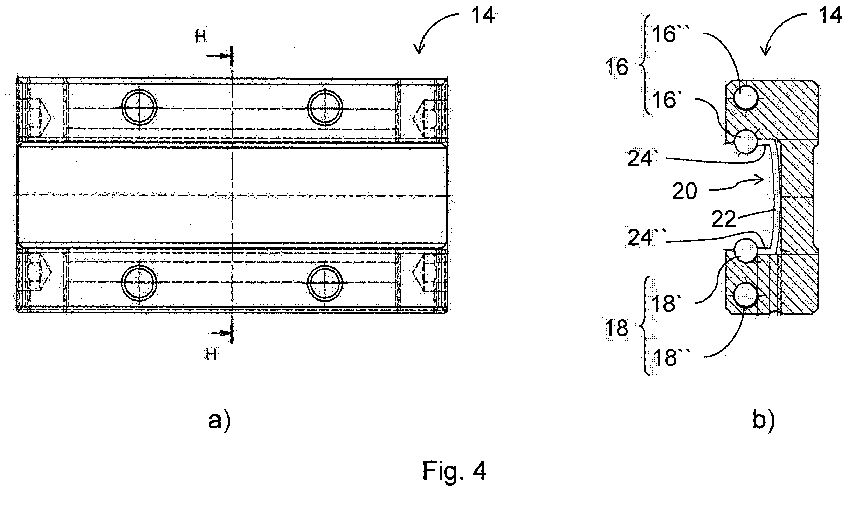

In Figuren 4a und 4b ist ein Laufwagen 14 einer Linearführung gemäss Fig. 1 in einer dritten Ausführungsform gezeigt. Fig. 4a zeigt eine Draufsicht auf den Laufwagen 14, und Fig. 4b zeigt eine Schnittansicht entlang einer in Fig. 4a gezeigten Linie H-H. Wie die Figuren 4a und 4b andeuten, ist der Laufwagen 14 gemäss Fig. 4a identisch mit dem Laufwagen 14 gemäss Fig. 2a.

Im Falle der Ausführungsform gemäss Fig. 4b ist eine Schmiermittelvorrichtung mit zumindest einem schmiermittelabsorbierenden Element 20 vorgesehen, welches in einen:Aufnahmebereich zwischen Laufwagen 14 und Laufschiene eingebracht ist und am Laufwagen 14 selber gehalten ist. Das schmiermittelabsorbierende Element 20 ist U-förmig aus einer Basis 22 und zwei von der Basis 22 vorragenden Schenkeln 24', 24" ausgebildet. Der Aufnahmebereich und das schmiermittelabsorbierende Element 20 sind hierbei derart ausgeführt, dass die Aussenflächen der Schenkel 24', 24" gegen Seitenwände des Aufnahmebereichs fest anliegen. Endabschnitte der Schenkel 24', 24" sind dabei mit den im Lastkanal 16', 18' geführten Wälzkörpern in Kontakt. Weiterhin weist die Basis 22 des schmiermittelabsorbierenden Elements 20 eine nach oben gerichtete Wölbung auf. Diese Wölbung der Basis 22 des schmiermittelabsorbierenden Elements 20 ist derart ausgebildet, dass eine von den beiden Schenkel 24', 24" abgewandte Fläche der Basis 22 in etwa in der Mitte zwischen den beiden Schenkel 24', 24" an eine Fläche des Laufwagen 14 gedrückt ist und dabei eine Krafteinwirkung auf die Fläche des Laufwagen 14 erzeugt, wenn das schmiermittelabsorbierenden Elements 20 in den Aufnahmebereich zwischen Laufwagen 14 und Laufschiene derart eingebracht ist, dass die Endabschnitte der Schenkel 24', 24" mit den im Lastkanal 16', 18' geführten Wälzkörpern in Kontakt sind.

In diesem Fall ist die Krafteinwirkung, welche das schmiermittelabsorbierende Element 20 auf eine Fläche des Laufwagens 14 erzeugt, eine Federkraft, welche einer auf die Wölbung der Basis 22 angelegten Kraft zur Überführung der Basis 22 in eine ebene Fläche entgegengesetzt gerichtet ist. Durch diese Anordnung ist das schmiermittelabsorbierende Element 20 in alle Richtungen, mit Ausnahme der Richtung parallel zur Laufschiene, fest gelagert.

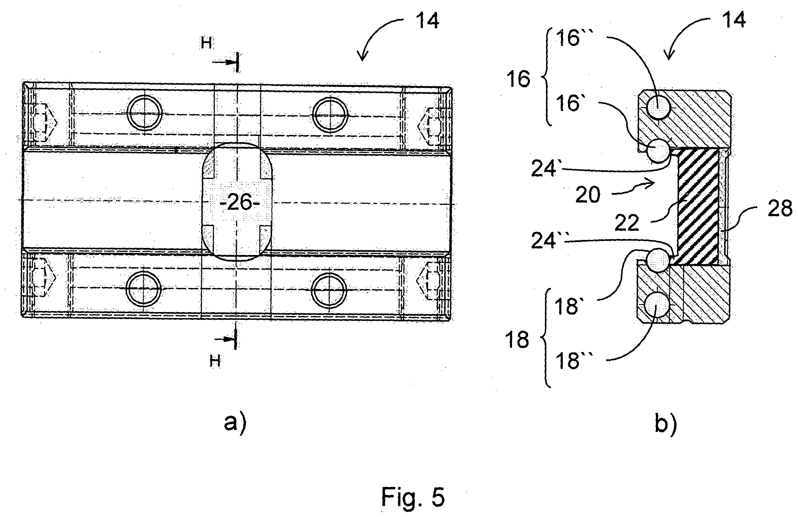

Figuren 5a und 5b zeigen den Laufwagen 14 einer Linearführung 10 gemäss Fig. 1 in einem Beispiel nicht gemäß der Erfindung. Fig. 5a zeigt eine Draufsicht auf die Oberseite des Laufwagens 14. Der Laufwagen 14 ist mit einem Aufnahmebereich 26 bereitgestellt, welcher auf der Oberseite des Laufwagens 14 eingelassen ist. Der Aufnahmebereich 26 ist zur Aufnahme einer Schmiermittelvorrichtung mit einem schmiermittelabsorbierenden Element 20 von der Oberseite des Laufwagens 14 aus ausgebildet (Fig. 5b). Das schmiermittelabsorbierende Element 20 gemäss Fig. 5b ist (wie das schmiermittelabsorbierende Element 20 gemäss Fig. 2b) U-förmig aus einer Basis 22 und zwei von der Basis 22 vorragenden Schenkeln 24', 24" ausgebildet. Ferner ist zwischen dem Aufnahmebereich 26 und den im Lastkanal 16', 18' umlaufenden Wälzkörpern ein Zugang bereitgestellt. Somit können die Endabschnitte der Schenkel 24', 24" des in den Aufnahmebereich 26 eingesetzten schmiermittelabsorbierenden Elements 20 mit Oberflächenabschnitten der Wälzkörper in Kontakt treten.

Der Aufnahmebereich 26 kann nach dem Einsetzen des schmiermittelabsorbierenden Elements 20 durch eine Verschlussplatte 28 abgedeckt und verschlossen werden. Die Verschlussplatte 28 kann dabei das schmiermittelabsorbierende Element 20 in Richtung der Wälzkörper drücken, so dass ein dauerhafter Kontakt zwischen den Endabschnitten der Schenkel 24', 24" und den Wälzkörpern gewährleistet ist. Auch in diesem Beispiel ist ein Austausch des schmiermittelabsorbierenden Elements 20 ohne Entnahme des Laufwagens 14 von der Laufschiene möglich.

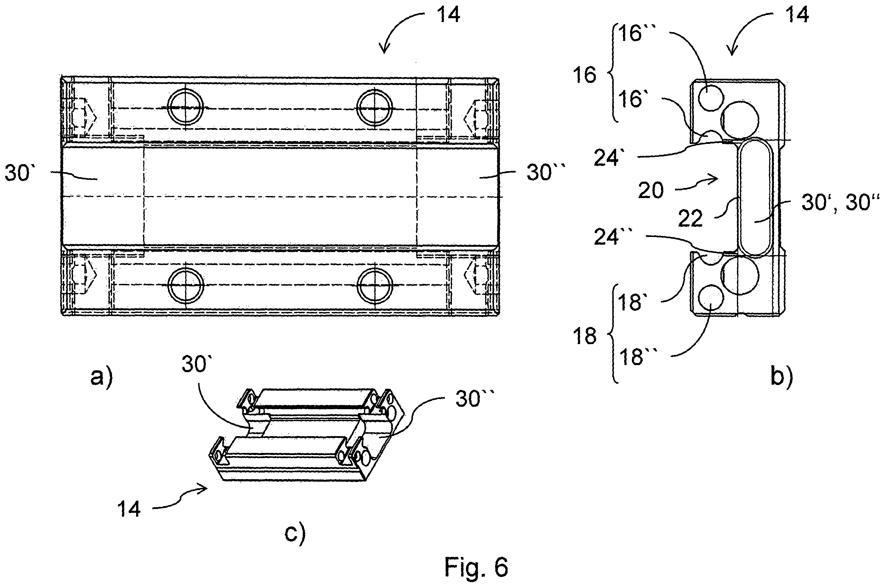

Figuren 6a bis 6c zeigen den Laufwagen 14 einer Linearführung gemäss Fig. 1 in einer vierten Ausführungsform. Hierbei zeigt Fig. 6a eine Draufsicht auf die Oberseite des Laufwagens 14. Durch gestrichelte Linien sind jeweils zwei Aussparungen 30', 30" angezeigt, welche jeweils an den beiden Längsenden des Laufwagens 14 eingelassen sind. Diese Aussparungen 30', 30" sind komplementär der Aussenform eines schmiermittelabsorbierenden Elements einer Schmiermittelvorrichtung (in Fig. 6c nicht gezeigt) angepasst. Wie insbesondere anhand von Fig. 6c gut zu erkennen, sind die Aussparungen 30', 30" in Richtung zur Unterseite des Laufwagens 14 geöffnet. Hierdurch ist es möglich, dass schmiermittelabsorbierende Elemente mit einem maximalen Volumen eingesetzt werden können. Ferner sind die Aussparungen 30', 30'' dergestalt ausgeformt, dass die Endabschnitte der Schenkel eines schmiermittelabsorbierenden Elements 20 einer Schmiermittelvorrichtung einen Zugang zu den Wälzkörpern haben (Fig. 6b). Fig. 6b zeigt eine Draufsicht auf eines der Enden des Laufwagens 14 (in Längsrichtung der Führungsschiene 12) mit einer der Aussparungen 30', 30", wobei in die jeweilige Aussparung 30' bzw. 30" jeweils eine Schmiermittelvorrichtung mit einem schmiermittelabsorbierenden Elements 20 eingesetzt ist. Das schmiermittelabsorbierende Element 20 gemäss Fig. 6b ist (wie das schmiermittelabsorbierende Element 20 gemäss Fig. 2b) U-förmig aus einer Basis 22 und zwei von der Basis 22 vorragenden Schenkeln 24', 24" ausgebildet.

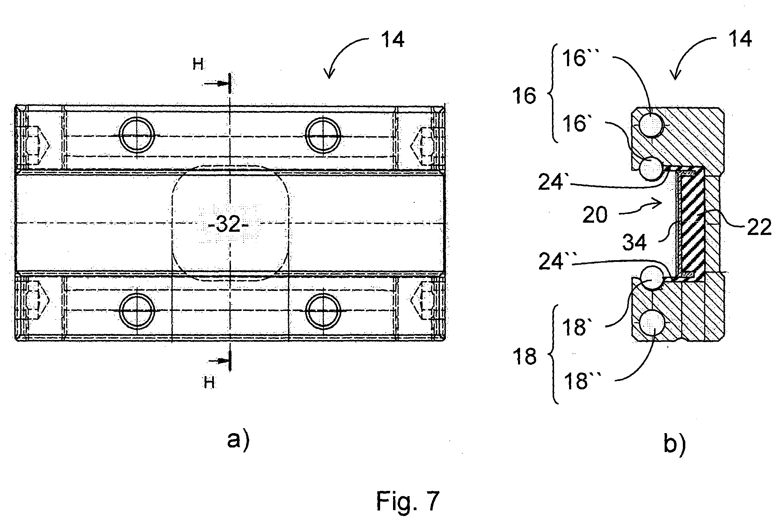

Figuren 7a und 7b zeigen den Laufwagen 14 einer Linearführung gemäss Fig. 1 in einer fünften Ausführungsform. Hierbei zeigt Fig. 7a eine Draufsicht auf die Oberseite des Laufwagens 14. Wie durch eine gestrichelte Linie angezeigt, ist an der Unterseite des Laufwagens 14 ein Aufnahmebereich 32 bereitgestellt. Dieser Aufnahmebereich 32 hat eine Form, welche komplementär zur Aussenform eines schmiermittelabsorbierenden Elements 20 einer Schmiermittelvorrichtung ist. Wie in Fig. 7b gezeigt, welche eine Schnittansicht entlang einer Linie H-H von Fig. 7a darstellt, kann das schmiermittelabsorbierende Element 20 von der Unterseite des Laufwagens 14 in den Aufnahmebereich 32 hinein eingesetzt werden. Das schmiermittelabsorbierende Element 20 gemäss Fig. 7b ist (wie das schmiermittelabsorbierende Element 20 gemäss Fig. 2b) U-förmig aus einer Basis 22 und zwei von der Basis 22 vorragenden Schenkeln 24', 24" ausgebildet. Wenn das schmiermittelabsorbierende Element 20 in den Aufnahmebereich 32 eingesetzt ist, treten die Schenkel 24', 24" des schmiermittelabsorbierenden Elements 20 mit den im Lastkanal 16', 18' umlaufenden Wälzkörpern in Kontakt. Zugleich ist das schmiermittelabsorbierende Element 20 fest im Aufnahmebereich 32 gehalten. Um das schmiermittelabsorbierende Element 20 schnell und einfach in den Aufnahmebereich 32 einlegen zu können, kann das schmiermittelabsorbierende Element 20 aus einem nachgiebigen, elastischen Material ausgebildet sein, beispielsweise ein Schaumstoff oder Gewebe. Damit ein Eindringen von Fremdstoffen in das Material der schmiermittelabsorbierende Element 20 verhindert wird, kann ein Verschluss 34 vorgesehen sein, welcher das schmiermittelabsorbierende Element 20 gegen die Unterseite abdichtet (wie in Fig. 7b dargestellt).

## Patentansprüche

1. Linearführung (10) mit einer Laufschiene (12) und einem Laufwagen (14), welcher auf der Laufschiene (12) verschiebbar gelagert ist, wobei der Laufwagen (14) zumindest zwei Wälzkörperkanäle (16, 18) enthält und in jeden der zwei Wälzkörperkanäle (16, 18) eine Vielzahl von Wälzkörpern eingebracht sind,
wobei jeder der zwei Wälzkörperkanäle (16, 18) aus einem Lastkanal (16', 18'), einem parallel hierzu ausgerichteten Rückführkanal (16", 18") und zwei jeweils ein Ende des Lastkanals (16', 18') mit einem Ende des Rückführkanals (16", 18") verbindenden Umlenkkanälen derart zusammengesetzt ist, dass die Wälzkörper in jeweils einem der Wälzkörperkanäle (16, 18) endlos umlaufend geführt sind, wobei die zumindest zwei Wälzkörperkanäle (16, 18) zueinander gegenüberliegend derart am Laufwagen (14) angeordnet sind, dass die jeweils im Lastkanal (16', 18') geführten Wälzkörper bei einem Führen des Laufwagens (14) entlang der Laufschiene (12) in einer von zwei sich in Längsrichtung der Laufschiene (12) erstreckenden Lastspuren (12', 12") der Laufschiene (12) wälzen,
wobei die Linearführung (10) eine Schmiermittelvorrichtung mit zumindest einem schmiermittelabsorbierenden Element (20) umfasst,
wobei das schmiermittelabsorbierende Element (20) U-förmig aus einer Basis (22) und zwei von der Basis (22) vorragenden Schenkeln (24', 24") ausgebildet ist und entnehmbar derart am Laufwagen (14) in einem sich zwischen einer Fläche des Laufwagens (14) und jedem der zwei Wälzkörperkanäle (16, 18) erstreckenden Aufnahmebereich für das schmiermittelabsorbierende Element (20) anbringbar ist, dass das schmiermittelabsorbierende Element (20), falls es am Laufwagen (14) angebracht ist, direkt mit den jeweils in den Lastkanälen (16', 18') geführten Wälzkörpern derart in Kontakt gebracht ist, dass Endabschnitte der Schenkel (24', 24") mit den in den Lastkanälen (16', 18') geführten Wälzkörpern in Kontakt stehen,
**dadurch gekennzeichnet, dass** das schmiermittelabsorbierende Element (20) derart geformt ist, dass es zum Anbringen in dem Aufnahmebereich als Ganzes in den Aufnahmebereich nur durch Überwinden einer Kraftweinwirkung einer Klemmkraft oder Federkraft einsetzbar ist, wobei durch die Krafteinwirkung der Klemmkraft oder der Federkraft eine Fläche des schmiermittelabsorbierenden Elements (20) zumindest abschnittsweise gegen eine Fläche des Laufwagens (14) in dem Aufnahmebereich gedrückt ist und das schmiermittelabsorbierende Element (20) fest zwischen den Wälzkörpern und der Fläche des Laufwagens (14) in dem Aufnahmebereich eingespannt und gehalten ist.

2. Linearführung (10) nach Anspruch 1, wobei die Klemmkraft oder die Federkraft durch eine Stauchung der Schenkel (24', 24") und/oder der Basis (22) des schmiermittelabsorbierenden Elements (20) beim Einsetzen des schmiermittelabsorbierenden Elements (20) hervorgerufen ist und der Richtung der Stauchung entgegengesetzt gerichtet ist.

3. Linearführung (10) nach Anspruch 1 oder 2, wobei die Basis (22) des schmiermittelabsorbierenden Elements (20) eine nach oben gerichtete Wölbung aufweist, wobei die Krafteinwirkung eine Federkraft ist, welche einer auf die Wölbung der Basis (22) angelegten Kraft zur Überführung der Basis (22) in eine ebene Fläche entgegengesetzt gerichtet ist.

4. Linearführung (10) nach Anspruch 1, wobei ein Federelement (25) zwischen der Basis (22) des schmiermittelabsorbierenden Elements (20) und der Fläche des Laufwagens (14) zwischengelegt ist und eine Federkraft zwischen der Basis (22) und der Fläche des Laufwagens (14) anlegt.

5. Linearführung (10) nach einem der Ansprüche 1 bis 4, ferner umfassend zwei Abdeckplättchen, welche jeweils an den Längsenden des Laufwagens (14) anbringbar sind, wobei die Abdeckplättchen ausgelegt sind, eine Längsverschiebung des schmiermittelabsorbierenden Elements (20) über die Längsenden des Laufwagens (14) hinaus zu unterbinden.

6. Linearführung (10) nach Anspruch 5, bei welcher die Abdeckplättchen jeweils flexible Dichtungslippen enthalten, welche den Laufbereich auf der Laufschiene (12) abdichtend umschliessen.

7. Linearführung (10) nach Anspruch 1, bei welcher der Laufwagen (14) zumindest eine an einem Längsende des Laufwagens (14) eingelassene Aussparung (30', 30") enthält, in welche das schmiermittelabsorbierende Element (20) von dem Längsende aus einsteckbar und gehalten ist.

8. Linearführung (10) nach Anspruch 1, bei welcher der Aufnahmebereich (32) des Laufwagens (14) zum Einsetzen des schmiermittelabsorbierenden Elements (20) von der Unterseite des Laufwagens (14) her zugänglich ist.

9. Linearführung (10) nach Anspruch 8, bei welcher der Aufnahmebereich (32) von der Unterseite des Laufwagens (14) durch eine Verschlussplatte (34) abdichtbar ist, wenn das schmiermittelabsorbierende Element (20) in den Aufnahmebereich (32) des Laufwagens (14) eingesetzt ist.

10. Linearführung (10) nach einem der Ansprüche 1-9, wobei das schmiermittelabsorbierende Element (20) einstückig aus einem schmiermittelabsorbierenden Material oder einer Kombination aus schmiermittelabsorbierenden Materialien ausgebildet ist.

11. Linearführung (10) nach Anspruch 10,
wobei das schmiermittelabsorbierende Element (20) aus einem verschleissfesten Material oder einer Kombination aus verschleissfesten Materialien ausgebildet ist.

## Claims

1. Linear guide (10) with a running rail (12) and a running carriage (14) which is mounted in a displaceable manner on the running rail (12), wherein the running carriage (14) contains at least two rolling body channels (16, 18) and a multiplicity of rolling bodies is introduced into each of the two rolling body channels (16, 18),
wherein each of the two rolling body channels (16, 18) is composed of a load-bearing channel (16', 18'), a return channel (16", 18") aligned in parallel thereto, and two diversion channels each connecting an end of the load-bearing channel (16', 18') with an end of the return channel (16", 18") so that the rolling bodies are guided so as circulate endlessly in each of the rolling body channels (16, 18), wherein the at least two rolling body channels (16, 18) are arranged on the running carriage (14) so as to lie opposite each other in such a way that on guiding the running carriage (14) along the running rail (12), the rolling bodies guided in the load-bearing channel (16', 18') roll in one of two load-bearing tracks (12', 12") extending in the longitudinal direction of the running rail (12),
wherein the linear guide (10) comprises a lubricant device with at least one lubricant-absorbing element (20),
wherein the lubricant-absorbing element (20) is designed as U-shaped, with a base (22) and two arms (24', 24") projecting from the base (22) and is configured to be detachably applied to the running carriage (14) in a receptacle area for the lubricant-absorbing element (20) extending between a surface of the running carriage (14) and each of the two rolling body channels (16, 18) in such a way that the lubricant absorbing element (20), if applied to the running carriage (14), is brought into direct contact with the rolling bodies guided in the load-bearing channels (16', 18') so that the end sections of the arms (24', 24") are in contact with the rolling bodies guided in the load-bearing channels (16', 18'),
**characterized in that**
the lubricant-absorbing element (20) is shaped in such a manner that the lubricant-absorbing element (20) - for applying it to the receptacle area - is insertable as a whole into the receptacle area only by overcoming a force exertion of a clamping force or a spring force,
whereby a surface of the lubricant-absorbing element (20) is pressed, at least in sections, through the force exertion of the clamping force or the spring force against a surface of the running carriage (14) in the receptacle area and the lubricant-absorbing element (20) is firmly clamped and held between the rolling bodies and the surface of the running carriage (14) in the receptacle area.

2. Linear guide (10) according to claim 1, wherein the clamping force or the spring force is produced through compression of the arms (24', 24") and/or the base (22) of the lubricant-absorbing element (20) upon an insertion of the lubricant-absorbing element (20) and is directed in the opposite direction of the compression.

3. Linear guide (10) according to claim 1 or 2, wherein the base (22) of the lubricant-absorbing element (20) has an upwardly curved section, wherein the force effect is a spring force which is directed in the opposite direction to a force applied to the curved section of the base (22) in order to bring the base (22) in a flat plane.

4. Linear guide (10) according to claim 1 wherein a spring element (25) is inserted between the base (22) of the lubricant-absorbing element (20) and the surface of the running carriage (14) and applies a spring force between the base (22) and the surface of the running carriage (14) .

5. Linear guide (10) according to any one of claims 1 to 4, also comprising two cover plates, which can each be applied to the longitudinal ends of the running carriage (14), wherein the cover plates are designed to prevent a longitudinal displacement of the lubricant-absorbing element (20) beyond the longitudinal ends of the running carriage (14).

6. Linear guide (10) according to claim 5, in which the cover plates each have flexible sealing lips which surround the running area on the running rail (12) in a sealing manner.

7. Linear guide (10) according to claim 1 in which the running carriage (14) has at least one recess (30', 30") let into a longitudinal end of the running carriage (14) into which the lubricant-absorbing element (20) can be inserted from the longitudinal end and in which the lubricant-absorbing element (20) can be held in place.

8. Linear guide (10) according to claim 1 in which the receptacle area (32) of the running carriage (14) is accessible from the underside of the running carriage (14) for the purpose of inserting the lubricant-absorbing element (20) into the receptacle area (32).

9. Linear guide (10) according to claim 8 in which the receptacle area (32) can be sealed off from the underside of the running carriage (14) by a cover plate (34) when the lubricant-absorbing element (20) has been inserted into the receptacle area (32) of the running carriage (14).

10. Linear guide (10) according to any one of claims 1 - 9, wherein the lubricant-absorbing element (20) is made in one piece of a lubricant-absorbing material or a combination of lubricant-absorbing materials.

11. Linear guide (10) according to claim 10, wherein the lubricant-absorbing element (20) is made of a wear-resistant material or a combination of wear-resistant materials.

## Revendications

1. Guide linéaire (10) comportant un rail (12) et un chariot (14) qui s'appuie de manière à pouvoir se déplacer sur le rail (12), le chariot (14) contenant au moins deux canaux à corps laminé (16,18) et une multitude de corps laminés étant installés dans chacun des deux canaux à corps laminé (16,18),
chacun des deux canaux à corps laminé (16,18) étant composé d'un canal de charge (16', 18'), d'un canal de renvoi (16", 18") orienté parallèlement à celui-ci et de deux canaux de déviation connectant respectivement une extrémité du canal de charge (16', 18') à une extrémité du canal de renvoi (16", 18") de manière à ce que les corps laminés soient guidés en périphérie en continu respectivement dans un des canaux à corps laminé (16,18), les au moins deux canaux à corps laminé (16,18) étant disposés à l'opposé l'un de l'autre au niveau du chariot (14) de manière à ce que les corps laminés respectivement guidés dans le canal de charge (16', 18'), lors d'un guidage du chariot (14) le long du rail (12), roulent dans une de deux pistes de charge (12', 12") s'étendant dans le sens longitudinal du rail (12) du rail (12),
le guide linéaire (10) comprenant un dispositif à lubrifiant doté d'au moins un élément (20) absorbant du lubrifiant,
l'élément absorbant du lubrifiant (20) étant réalisé en forme de U à partir d'une base (22) et de deux branches (24', 24") dépassant de la base (22) et pouvant être installé de manière amovible au niveau du chariot (14) dans une zone de réception s'étendant entre une surface du chariot (14) et chacun des deux canaux à corps laminé (16,18) pour l'élément absorbant du lubrifiant (20) de manière à ce que l'élément absorbant du lubrifiant (20), s'il est installé au niveau du chariot (14), soit amené directement en contact avec les corps laminés guidés respectivement dans les canaux de charge (16', 18') de manière à ce que les sections terminales des branches (24', 24") soient en contact avec les corps laminés guidés dans les canaux de charge (16', 18'),
**caractérisé en ce que** l'élément absorbant du lubrifiant (20) est formé de manière à ce qu'il soit utilisable pour une installation dans la zone de réception en totalité dans la zone de réception seulement en surmontant un effet de force d'une force de serrage ou d'une force de ressort, sachant que, par l'effet de force de la force de serrage ou de la force de ressort, une surface de l'élément absorbant du lubrifiant (20) est comprimée du moins par sections contre une surface du chariot (14) dans la zone de réception et que l'élément absorbant du lubrifiant (20) est serré est maintenu fermement entre les corps laminés et la surface du chariot (14) dans la zone de réception.

2. Guide linéaire (10) selon la revendication 1, dans lequel la force de serrage ou la force de ressort est provoquée par un refoulement des branches (24', 24") et/ou de la base (22) de l'élément absorbant du lubrifiant (20) lors de l'insertion de l'élément absorbant du lubrifiant (20) et que le sens du refoulement est dirigé en sens inverse.

3. Guide linéaire (10) selon la revendication 1 ou 2, dans lequel la base (22) de l'élément absorbant du lubrifiant (20) présente un bombement dirigé vers le haut, l'effet de force étant une force de ressort qui est dirigée à l'opposé d'une force appliquée sur le bombement de la base (22) pour transformer la base (22) en une surface plane.

4. Guide linéaire (10) selon la revendication 1, dans lequel un élément à ressort (25) est intercalé entre la base (22) de l'élément absorbant du lubrifiant (20) et la surface du chariot (14) et qu'une force de ressort est appliquée entre la base (22) et la surface du chariot (14).

5. Guide linéaire (10) selon une des revendications 1 à 4, comprenant en outre deux plaquettes de recouvrement qui peuvent être installées respectivement aux extrémités longitudinales du chariot (14), les plaquettes de recouvrement étant conçues pour empêcher un décalage longitudinal de l'élément absorbant du lubrifiant (20) au-delà des extrémités longitudinales du chariot (14).

6. Guide linéaire (10) selon la revendication 5, dans lequel les plaquettes de recouvrement comprennent respectivement des lèvres d'étanchéité souples qui circonscrivent hermétiquement la zone de roulement sur le rail (12).

7. Guide linéaire (10) selon la revendication 1, dans lequel le chariot (14) comporte au moins un évidement (30', 30") pratiqué à une extrémité longitudinale du chariot (14) et dans lequel l'élément absorbant du lubrifiant (20) est insérable en partant de l'extrémité longitudinale et maintenu.

8. Guide linéaire (10) selon la revendication 1, dans lequel la zone de réception (32) du chariot (14) est accessible, pour l'insertion de l'élément absorbant du lubrifiant (20), depuis la face inférieure du chariot (14) .

9. Guide linéaire (10) selon la revendication 8, dans lequel la zone de réception (32) peut être étanchéifiée depuis la face inférieure du chariot (14) par une plaque obturatrice (34) lorsque l'élément absorbant du lubrifiant (20) est inséré dans la zone de réception (32) du chariot (14).

10. Guide linéaire (10) selon une des revendications 1 à 9, dans lequel l'élément absorbant du lubrifiant (20) est réalisé en une pièce à partir d'un matériau absorbant du lubrifiant ou d'une combinaison de matériaux absorbant du lubrifiant.

11. Guide linéaire (10) selon la revendication 10, dans lequel l'élément absorbant du lubrifiant (20) est réalisé à partir d'un matériau résistant à l'usure ou d'une combinaison de matériaux résistant à l'usure.
